# EUROPÄISCHE PATENTSCHRIFT

(11) **EP 1 523 402 B1**
(45) Veröffentlichungstag und Bekanntmachung des Hinweises auf die Patenterteilung: **13.04.2011**
(21) Anmeldenummer: 03763822.8
(22) Anmeldetag: 11.07.2003
(51) Int. Cl.: B29C 45/14

(54) **VORRICHTUNG UND VERFAHREN ZUM HERSTELLEN EINES SPRITZGUSSARTIKELS, AUF DESSEN AUSSENUMFANGSFLÄCHE EIN ETIKETT ANGEORDNET IST**
DEVICE AND METHOD FOR PRODUCING AN INJECTION MOULDED ARTICLE TO THE EXTERNAL PERIPHERAL SURFACE OF WHICH A LABEL IS APPLIED
DISPOSITIF ET PROCEDE POUR REALISER UN ARTICLE MOULE PAR INJECTION A LA SURFACE PERIPHERIQUE EXTERNE DUQUEL EST APPLIQUE UNE ETIQUETTE

(30) Priorität: 12.07.2002 DE 10231654
(43) Veröffentlichungstag der Anmeldung: 20.04.2005
(73) Patentinhaber: HEKUMA GmbH, 85386 Eching (DE)
(72) Erfinder: ZIMMERMANN, Peter, 85630 Grasbrunn (DE)
(74) Vertreter: Klingseisen, Franz
(86) Internationale Anmeldenummer: PCT/EP2003/007550
(87) Internationale Veröffentlichungsnummer: WO 2004/007167

(56) Entgegenhaltungen:
- EP-A- 0 395 585
- WO-A-97/28944
- US-A- 5 614 146

## Beschreibung

Die Erfindung betrifft eine Vorrichtung nach dem Oberbegriff des Anspruchs 1 sowie ein Verfahren nach dem Oberbegriff des Anspruchs 5.

Aus EP 0 395 585 A ist es bekannt, für die Herstellung von mit einem Etikett versehenen Bechern ein Etikett zylinderförmig gerollt auf einen kegelstumpfförmigen Formkörper aufzusetzen, auf dem sich das zylinderförmige Etikett durch Wärmeeinwirkung kegelstumpfförmig an den Formkörper anlegt. Hierauf wird der Formkörper mit dem darauf angeformten Etikett in einen Formhohlraum eingesetzt. In einem weiteren Schritt wird durch Auflegen einer Folienbahn und Eindrücken eines Formstempels in den Formhohlraum ein Becher geformt, auf dessen Umfang das zuvor in den Formhohlraum eingebrachte Etikett haftet.

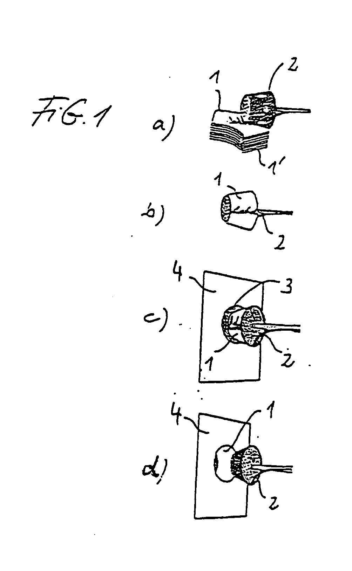

Aus EP 802 032 ist ein Verfahren und eine Vorrichtung dieser Art zum Spritzgießen eines Bechers mit einem Etikett auf dem Außenumfang bekannt. Fig. 1 zeigt im Schritt a das Aufnehmen eines Etiketts 1 mittels eine kegelstumpfförmig gestalteten Überfübrimgswerkzeugs 2 von einem Etikettenstapel 1', wobei der auf dem Außenumfang mit einer elektrisch leitenden Schicht und Vakuumbohrungen versehene Kegelstumpf unter Vakuumbeaufschlagung auf dem Etikett abgerollt wird, so dass sich das Etikett um den Umfang des Kegelstumpfs legt, wie dies in Schritt b wiedergegeben ist. Hierauf wird das Etikett im Schritt c in einen Formhohlraum 3 eines Spritzgießwerkzeugs 4 der Spritzgießmaschine überführt, wobei nach dem Einführen des kegelstumpfförmigen Überfuhrungswerkzeugs in den Formhohlraum dieses derart mit Spannung beaufschlagt wird, dass das Etikett elektrostatisch aufgeladen und an der Innenumfangsfläche des Formhohlraums durch die elektrostatische Aufladung festgehalten wird. Hierauf wird im Schritt d das Überführungswerkzeug aus dem Formhohlraum 3, in dem das Etikett 1 verbleibt, zurückgefahren, worauf die Form geschlossen wird und der Spritzgießvorgang ausgeführt werden kann.

Bei diesem bekannten Verfahren benötigt das Überführungswerkzeug zum Aufwickeln des Etiketts eine gewisse Zeit, bevor das Überführungswerkzeug in den Formhohlraum eingefahren werden kann, während der Spritzgießvorgang selbst relativ schnell abläuft. Deshalb muss die Spritzgießform eine gewisse Zeit untätig bereit gehalten werden, während das Etikett auf dem Überführungswerkzeug aufgewickelt und in den Formhohlraum überführt wird. Durch diese längere Taktzeit des Aufnehmens und Aufwickeln des Etiketts mittels des Überführungswerkzeugs gegenüber der Taktzeit der Spritzgießmaschine kann deren Kapazität nicht voll ausgenutzt werden.

Der Erfindung liegt die Aufgabe zugrunde, eine Vorrichtung und ein Verfahren der eingangs angegebenen Art so auszubilden, dass die Kapazität der Spritzgießmaschine besser ausgenutzt werden kann. Ferner soll eine Vorrichtung vorgeschlagen werden, mittels der eine Erhöhung der Kapazität der Spritzgießmaschine erreichbar ist.

Diese Aufgabe wird hinsichtlich der Vorrichtung durch die Merkmale im kennzeichnenden Teil des Anspruchs 1 gelöst. Dadurch kann das Überführungswerkzeug in schneller Taktfolge das Etikett aus der Vorformeinrichtung aufnehmen und in den Formhohlraum überführen, so dass während des Überführens eines Etiketts aus der Vorformeinrichtung in den Formhohlraum des Spritzgießwerkzeugs bereits ein weiteres Etikett in der Vorformeinrichtung vorgeformt und für die Übernahme durch das Überfiihrungswerkzeug bereitgestellt werden kann. Durch die Zwischenschaltung eines Vorformvorganges des Etiketts kann insgesamt mit einer höheren Taktfolge gearbeitet werden, die zu einer hohen Auslastung der Spritzgießmaschine führt.

Die Aufgabe zur Erhöhung der Kapazität einer Spritzgießmaschine wird auch durch die Merkmale des Kennzeichnenden Teils von Anspruch 5 gelöst.

Die Erfindung wird beispielsweise anhand der Zeichnung näher erläutert. Es zeigen
- Fig. 1: schematisch die einzelnen Schritte des Überführens eines Etiketts in den Formhohl- raum bei dem bekannten Verfahren,
- Fig. 2: in entsprechender Darstellung die Schrittfolge bei dem erfindungsgemäßen Verfah- ren mit einer Vorformeinrichtung,
- Fig. 3: eine Vorderansicht des Vorformblocks, und
- Fig. 4: schematisch einen Stützkern in der Vorform

Gegenüber dem in Fig. 1 wiedergegebenen bekannten Verfahren, bei dem das Überführungswerkzeug selbst das Etikett in die Gestalt bringt, in der es dann in den Formhohlraum 3 eingeführt werden kann, wird bei dem erfindungsgemäßen Verfahren in einem gesonderten Schritt das Etikett so vorgeformt, dass es vom Überführungswerkzeug lediglich übernommen und in den Formhohlraum 3 des Spritzgießwerkzeugs 4 eingebracht werden kann.

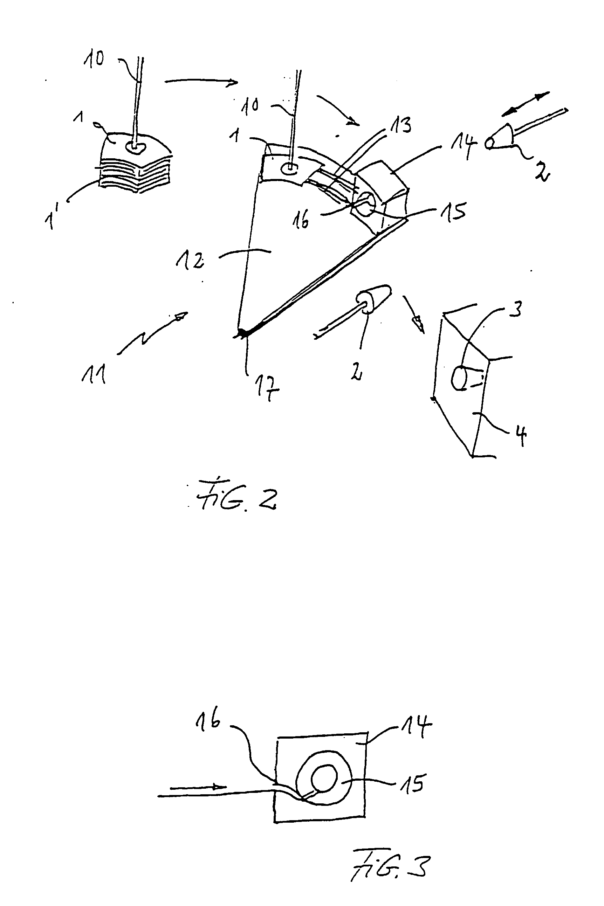

Fig. 2 zeigt schematisch diesen Verfahrensablauf. Zunächst wird ein Etikett 1 von einem beispielsweise mit Vakuum beaufschlagten Greifer 10 von einem Etikettenstapel 1' aufgenommen und mittels des Greifers 10 in Pfeilrichtung zu einer Vorformeinrichtung 11 überfährt, die eine kreissektorförmige Platte 12 aufweist, auf der kreisbogenförmig Führungsbahnen 13 ausgebildet sind, in denen nicht dargestellte, mit Vakuum beaufschlagbare Greifer verschiebbar geführt sind, die das Etikett 1 von dem Greifer 10 übernehmen und zu einem Formblock 14 führen, dessen Vorformhohlraum 15 dem Formhohlraum 3 des Spritzgießwerkzeugs 4 entspricht. Der Formblock 14 ist angrenzend an die Führungsbahnen 13 mit einem in Achsrichtung des Verformhohlraums 15 verlaufenden Schlitz 16 versehen, durch den das Etikett in den Vorformhohlraum 15 eingeführt wird, in dem es sich längs der kegelsturnpfförnügen Innenumfangswand anlegt. Sobald das Etikett auf dem Innenumfang des Vorformhohlraums 15 positioniert ist, wird das kegelstumpfförmige Überführungswerkzeug 2 in den Vorformhohlraum 15 eingefahren, worauf durch Vakuumbeaufschlagung des Überführungswerkzeugs 2 das Etikett übernommen und in den Formhohlraum 3 des Spritzgießwerkzeugs 4 überführt wird. Die Bohrungen und Leitungen an dem Überführungswerkzeug 2 für die Vakuumbeaufschlagung sind in Fig. 2 nicht dargestellt.

Während das vorgeformte Etikett mittels des Überführungswerkzeugs 2 von der Vorformeinrichtung 11 zum Formhohlraum 3 der Spritzgießmaschine überführt wird, kann bereits ein weiteres Etikett vom Stapel 1' abgenommen und in die Vorformeinrichtung 11 überführt werden, so dass nach dem Schließen der Spritzgießform 4 und dem Spritzgießvorgang bereits ein weiteres vorgeformtes Etikett für das Überführungswerkzeug 2 bereitgestellt ist und insgesamt mit einer hohen Taktfolge gearbeitet werden kann.

Damit das Etikett 1 in die einem kegelstumpfförmigen Becher entsprechende Form vorgeformt werden kann, wird das als Ausschnitt eines Kreisringsektors zugeschnittene Etikett 1 auf einer Kreisbogenbahn um einen Kreismittelpunkt 17 bewegt, wobei der Radius der Führungsbahn 13 dem Radius der Krümmung des Etiketts entspricht. Mit anderen Worten stellt das Etikett 1 auf der kreisbogenförmigen Führungsbahn 13 eine Abwicklung des Innenumfangs des Vorformhohlraums 15 dar.

Damit das Etikett beim Einführen in den Schlitz 16 des Formblocks 14 sich an den Innenumfang des Vorformhohlraums 15 anlegt, kann ein in Fig. 2 nicht dargestelltes Führungsblech am Schlitz 16 vorgesehen sein, das als Führung für das Etikett dient. Die Führungsbahn 13 kann sich bis zum Schlitz 16 erstrecken und gegebenenfalls auch um den Innenumfang des Vorformhohlraums, um das Aufwickeln des Etiketts durch die in der Führungsbahn geführten Greifer zu begünstigen bzw. sicher zu stellen.

Auch ist es möglich, den Schlitz 16 gekrümmt auszugestalten, so dass er etwa tangential zur Innenumfangswand des Vorformhohlraums 15 in diesen mündet, um das Anlegen des Etiketts an der Innenwand des Vorformhohlraums zu begünstigen. Fig. 3 zeigt als Beispiel einen derart gekrümmten Einführschlitz 16 in einer Ansicht des Vorformhohlraums 15 von der Seite des Eingriffs des Überführungswerkzeugs 2.

Anstelle der beschriebenen Vorformeinrichtung 11 können in Abhängigkeit von einer anderen Gestalt eines Spritzgussartikels auch andere Vorformeinrichtungen vorgesehen werden. Entsprechend kann die Zwischenschaltung einer Vorformeinrichtung auch bei der Herstellung eines anders gestalteten Spritzgußartikels vorgesehen werden, auf dessen Außenseite ein Etikett oder eine andere Applikation anzubringen ist.

Wenn beispielsweise größere Spritzgussartikel wie Eimer oder Spritzgussartikel mit einer großen Seitenlänge, beispielsweise bei einem etwa rechteckigen Behälter, vorgesehen werden, ist es zweckmäßig, den Vorformvorgang durch eine Hilfseinrichtung zu unterstützen.

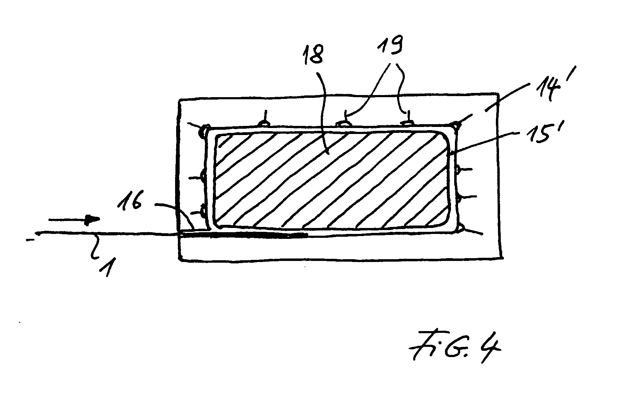

Fig. 4 zeigt einen Formblock 14' mit einem etwa rechteckigen Vorformhohlraum 15'. Längs einer Längsseite des Vorformhohlraums mündet der Schlitz 16 zum Einführen des Etiketts 1. Damit das Etikett 1 längs der engen Radien an den Ecken und über die größeren Seitenlängen des Vorformhohlraums besser geführt wird, ist ein Stützkern 18 vorgesehen, der nur während des Vorformvorgangs in den Vorformhohlraum 15' eingesetzt wird. Hierdurch wird längs des Umfangs des Vorformhohlraums 15' ein Spalt gebildet, durch den das Etikett 1 geführt wird.

Der Stützkern 18 kann mittels eines nicht dargestellten Greifers in die Vorform eingeführt und nach dem Vorformvorgang wieder herausgenommen werden, damit das Überführungswerkzeug 2 zur Aufnahme des vorgeformten Etiketts eingreifen kann. Hierbei kann der Stützkern 18 von der einen oder anderen Seite der auf beiden Seiten offenen Vorform ein- und ausgefahren werden.

Fig. 4 zeigt Saugeinrichtungen 19, beispielsweise Bohrungen, die mit Vakuum beaufschlagt werden, die wenigstens teilweise um den Umfang des Vorformhohlraums 15' angeordnet sind. Nach dem Vorformen und Entfernen des Stützkerns 18 kann durch diese Saugeinrichtungen 19 das Etikett eng an der Vorform anliegend gehalten werden. Solche Saugeinrichtungen 19 können beispielsweise nur auf den langen Seiten und insbesondere an den engen Radien des Vorformhohlraums 15' in Verbindung mit einem Stützkern 18 oder auch ohne einen Stützkern 18 vorgesehen sein.

Es können auch in anderer Weise vorgeformte Applikationen bzw. Etiketten in bereits vorgeformtem Zustand in die Vorform 14, 15 eingesetzt und dann von dem Überführungswerkzeug 2 in den Formhohlraum 3 des Spritzgießwerkzeugs überführt werden. Auf diese Weise wird eine Erhöhung der Taktzeit der Spritzgießmaschine erreicht.

## Patentansprüche

1. Vorrichtung zum Herstellen eines Spritzgussartikels, beispielsweise eines Bechers, auf dessen Außenumfang ein Etikett angeordnet ist, umfassend
- eine Spritzgießform (4) mit zwei Formhälften, die im geschlossenen Zustand einen Formhohlraum (3) entsprechend der Gestalt des herzustellenden Artikels bilden,
- ein Überführungswerkzeug (2), mittels dem das Etikett in den Formhohlraum (3) einer Formhälfte (4) überführbar ist,
- eine Vorformeinrichtung (11), in der das Etikett (1) im Wesentlichen in die Gestalt vorgeformt wird, in der das Etikett in den Formhohlraum (3) einer Formhälfte einzusetzen ist,
**dadurch gekennzeichnet,**
- **dass** zudem eine Führungsbahn (13), längs der wenigstens ein Greifer für das Etikett geführt ist, und ein Formblock (14) mit einem Vorformhohlraum (15) vorgesehen ist, der dem Formhohlraum (3) des Spritzgießwerkzeugs (4) entspricht, wobei in dem Formblock (14) ein Schlitz (16) nahe der Führungsbahn (13) zur Aufnahme des Etiketts (1) ausgebildet ist, und
- das Überführungswerkzeug (2) das vorgeformte Etikett aus der Vorformeinrichtung (11) aufnimmt und zur Spritzgießform (4) überführt.

2. Vorrichtung nach Anspruch 1, bei der die Führungsbahn (13) kreisbogenformig gekrümmt und der Vorformhohlraum (15) kegelstumpfförmig ausgebildet ist, wobei der Radius der Krümmung der Führungsbahn (13) auf der Seite des kleinsten Durchmessers des Vorformhohlraums (15) liegt.

3. Vorrichtung nach einem der Ansprüche 1 oder 2, wobei ein Stützkern (18) in den Vorformhohlraum (15') zum Führen des Etiketts (1) beim Vorformen einsetzbar ist.

4. Vorrichtung nach einem der Ansprüche 1 bis 3, wobei wenigstens teilweise auf dem Innenumfang des Vorformhohlraums (15') Saugeinrichtungen (19) zum Halten des Etiketts (1) in der vorgeformten Gestalt vorgesehen sind

5. Verfahren zum Herstellen eines Spritzgussartikels, beispielsweise eines Bechers, auf dessen Außenumfang ein Etikett angeordnet ist, umfassend die folgenden Schritte
- Bereitstellen einer Spritzgießform (4) mit zwei Formhälften, die im geschlossenen Zustand einen Formhohlraum (3) entsprechend der Gestalt des herzustellenden Artikels bilden,
- Aufbringen des Etiketts (1) auf einem Überführungswerkzeug (2),
- Überführen des Etiketts in den Formhohlraum (4) der einen Formhälfte mittels des Überführungswerkzeugs,
- worauf nach dem Positionieren des Etiketts im Formhohlraum (3) das Überführungswerkzeug (2) aus dem Formhohlraum (3) herausbewegt wird und die Formhälften zum Spritzgießen geschlossen werden, wobei
- das Etikett (1) vor dem Aufbringen auf dem Überführungswerkzeug (2) in einer Vorformeinrichtung (11) in die Gestalt zum Einbringen in den Formhohlraum (3) vorgeformt wird und
- aus der Vorformeinrichtung (11) mittels des Überführungswerkzeugs (2) in den Formhohlraum (3) überführt wird,
**dadurch gekennzeichnet, dass** eine Vorrichtung nach Anspruch 1 verwendet wird.

## Claims

1. Device for fabricating an injection molded article, for example a beaker, on whose outer circumference a label is arranged, comprising:
- an injection mold (4) having two mold halves which, in the closed state, form a mold cavity (3) corresponding to the shape of the article to be fabricated,
- a transfer tool (2) by means of which the label is transferable into the mold cavity (3) of a mold half (4),
- a preforming means (11), in which the label (1) is preformed substantially into the shape in which the label is to be inserted in the mold cavity (3) of one mold half,
**characterised in that**
- in addition, a guideway (13) is provided, along which at least one gripper for the label is guided, and a forming block (14) is provided having a preform cavity (15) corresponding to the mold cavity (3) of the injection molding tool (4), wherein in the forming block (14) a slit (16) is formed near the guideway (13) for taking up the label (1), and
- the transfer tool (2) takes up the preformed label out of the preforming means (11) and transfers it to the injection mold (4).

2. Device according to claim 1, in which the guideway (13) is formed curved in a circular arc shape and the preform cavity (15) is formed in a truncated cone shape, wherein the radius of curvature of the guideway (13) lies on the side of the smallest diameter of the preform cavity (15).

3. Device according to one of claims 1 or 2, wherein a supporting core (18) is insertable in the preform cavity (15') for guiding the label (1) during preforming.

4. Device according to one of claims 1 to 3, wherein at least partially on the inner circumference of the preform cavity (15') suction means (19) are provided for holding the label (1) in the preformed shape.

5. Method for fabricating an injection molded article, for example a beaker, on whose outer circumference a label is arranged, comprising the following steps:
- providing an injection mold (4) having two mold halves which, in the closed state, form a mold cavity (3) corresponding to the shape of the article to be fabricated,
- placing the label (1) on a transfer tool (2),
- transferring the label into the mold cavity (3) of the one mold half by means of the transfer tool,
- whereupon after positioning of the label in the mold cavity (3) the transfer tool (2) is moved out of the mold cavity (3) and the mold halves are closed for injection molding, wherein
- the label (1) is preformed in a preforming means (11) into the shape for insertion into the mold cavity (3) before it is placed on the transfer tool (2), and
- transferred by the transfer tool (2) from the preforming means (11) into the mold cavity (3),
**characterised in that** a device according to claim 1 is used.

## Revendications

1. Dispositif pour réaliser un articlé moulé par injection, par exemple un gobelet, à la surface périphérique externe duquel est disposée une étiquette, comprenant
- un moule de moulage par injection (4) avec deux moitiés de moule qui forment à l'état fermé, un espace creux de moule (3) correspondant à la forme de l'article à réaliser,
- un outil de transfert (2), au moyen duquel l'étiquette peut être transférée dans l'espace creux de moule (3) d'une moitié de moule (4),
- un dispositif de préformage (11), dans lequel l'étiquette (1) est sensiblement préformée selon la forme dans laquelle l'étiquette doit être insérée dans l'espace creux de moule (3) d'une moitié de moule,
**caractérisé en ce que**
- une glissière de guidage (13), le long de laquelle au moins une pince pour l'étiquette est guidée, et un bloc de moule (14) avec un espace creux de préformage (15) sont de plus prévus, lequel correspond à l'espace creux de moule (3) de l'outil de moulage par injection (4), une fente (16) étant réalisée dans le bloc de moule (14) près de la glissière de guidage (13) pour la réception de l'étiquette (1), et
- l'outil de transfert (2) reçoit l'étiquette préformée du dispositif de préformage (11) et la transfère au moule de moulage par injection (4).

2. Dispositif selon la revendication 1, pour lequel la glissière de guidage (13) est courbée selon un arc de cercle et l'espace creux de préformage (15) est réalisé en forme de cône tronqué, le rayon de courbure de la glissière de guidage (13) se trouvant du côté du plus petit diamètre de l'espace creux de préformage (15).

3. Dispositif selon l'une quelconque des revendications 1 ou 2, un noyau d'appui (18) pouvant être inséré dans l'espace creux de préformage (15') pour le guidage de l'étiquette (1) lors du préformage.

4. Dispositif selon l'une quelconque des revendications 1 à 3, des dispositifs d'aspiration (19) pour le maintien de l'étiquette (1) dans la forme préformée étant prévus au moins en partie sur la surface périphérique interne de l'espace creux de préformage (15').

5. Procédé pour réaliser un articlé moulé par injection, par exemple un gobelet, à la surface périphérique externe duquel est disposée une étiquette, comprenant les étapes suivantes
- mise à disposition d'un moule de moulage par injection (4) avec deux moitiés de moule qui forment à l'état fermé, un espace creux de moule (3) correspondant à la forme de l'article à réaliser,
- application de l'étiquette (1) sur un outil de transfert (2),
- transfert de l'étiquette dans l'espace creux de moule (4) d'une moitié de moule au moyen de l'outil de transfert,
- suite à quoi après le positionnement de l'étiquette dans l'espace creux de moule (3), l'outil de transfert (2) est déplacé de l'espace creux de moule (3) et les moitiés de moule sont fermées pour le moulage par injection,
- l'étiquette (1) étant préformée dans la forme avant l'application sur l'outil de transfert (2) dans un dispositif de préformage (11) pour l'introduction dans l'espace creux de moule (3) et
- étant transférée du dispositif de préformage (11) au moyen de l'outil de transfert (2) dans l'espace creux de moule (3),
**caractérisé en ce qu'**un dispositif selon la revendication 1 est utilisé.
